(19) **Europäisches Patentamt / European Patent Office / Office européen des brevets**

(11) **EP 4 692 275 A1**

(12) **EUROPEAN PATENT APPLICATION**
published in accordance with Art. 153(4) EPC

(43) Date of publication:
**11.02.2026 Bulletin 2026/07**

(21) Application number: **24780307.5**

(22) Date of filing: **26.03.2024**

(51) International Patent Classification (IPC):
*C09K 3/14* $^{(2006.01)}$     *B24B 37/00* $^{(2012.01)}$
*C01F 7/02* $^{(2022.01)}$     *C09G 1/02* $^{(2006.01)}$

(52) Cooperative Patent Classification (CPC):
**B24B 37/00; C01F 7/02; C09G 1/02; C09K 3/14**

(86) International application number:
**PCT/JP2024/011946**

(87) International publication number:
**WO 2024/204197 (03.10.2024 Gazette 2024/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **30.03.2023 JP 2023056492**

(71) Applicant: **Fujimi Incorporated**
**Kiyosu-shi, Aichi 452-8502 (JP)**

(72) Inventors:
• **TENKO, Kyosuke**
  **Kiyosu-shi, Aichi 452-8502 (JP)**
• **YASUI, Daisuke**
  **Kiyosu-shi, Aichi 452-8502 (JP)**
• **ITO, Jun**
  **Kiyosu-shi, Aichi 452-8502 (JP)**
• **MORINAGA, Hitoshi**
  **Kiyosu-shi, Aichi 452-8502 (JP)**

(74) Representative: **Grünecker Patent- und Rechtsanwälte**
**PartG mbB**
**Leopoldstraße 4**
**80802 München (DE)**

(54) **POLISHING COMPOSITION, METHOD FOR PRODUCING SAME, AND POLISHING METHOD**

(57) Provided are a high-performance polishing composition, a method for producing the same, and a polishing method. The polishing composition contains abrasive grains, water, and a hydrophobic dispersion medium. The value of a shape parameter K, obtained by dividing the specific surface area (m²/g) by the square of the particle diameter D50 (μm) of the abrasive grains, is from 0.6 to 60.

**Description**

Technical Field

The disclosure relates to a polishing composition, a method for producing the same, and a polishing method.

Background Technology

Buff polishing process is known as a processing method for smoothing the surface of a resin coating film coated on the surface of an automobile body or the like to produce gloss. The buff polishing process is a processing method in which, for example, a polishing composition is interposed between a cloth buff and a polishing target, and the rotating buff is pressed against the polishing target (for example, resin coating film) to polish the surface.

The polishing composition used in the buff polishing process contains abrasive grains (polishing material) and a surfactant, and for example, aluminum oxide (alumina) particles are used as the abrasive grains (see, for example, Patent Documents 1 to 3). With such a polishing composition, it becomes possible to remove scratches generated on the surface of the polishing target.

Related Art Documents

Patent Documents

Patent Document 1: Japanese Patent Application Laid-Open No. 2008-255232
Patent Document 2: Japanese Patent Application Laid-Open No. 2008-127456
Patent Document 3: Japanese Patent Application Laid-Open No. 2007-277379

SUMMARY OF INVENTION

Problem to be Solved by the Disclosure

However, there has been a trade-off problem that as the processing power of the polishing composition increases to shorten the time for scratch removal, the polishing time becomes shorter but the finished surface after polishing tends to deteriorate, and as the processing power decreases, the finished surface improves but the polishing time becomes longer. Therefore, there is a demand for a high-performance polishing composition that can efficiently remove scratches from the polishing target while obtaining a good finished surface after polishing.

The disclosure has been made in view of such circumstances, and aims to provide a high-performance polishing composition, a method for producing the same, and a polishing method. Means for Solving the Problem

To solve the aforementioned problem, a polishing composition according to one aspect of the disclosure includes abrasive grains, water, and a hydrophobic dispersion medium, in which the value of a shape parameter K, obtained by dividing a specific surface area ($m^2$/g) of the abrasive grains by the square of a particle diameter D50 ($\mu$m) is 0.6 or more and 60 or less.

Effects of the Disclosure

According to one aspect of the disclosure, a high-performance polishing composition, a method for producing the same, and a polishing method can be provided.

BRIEF DESCRIPTION OF THE DRAWINGS

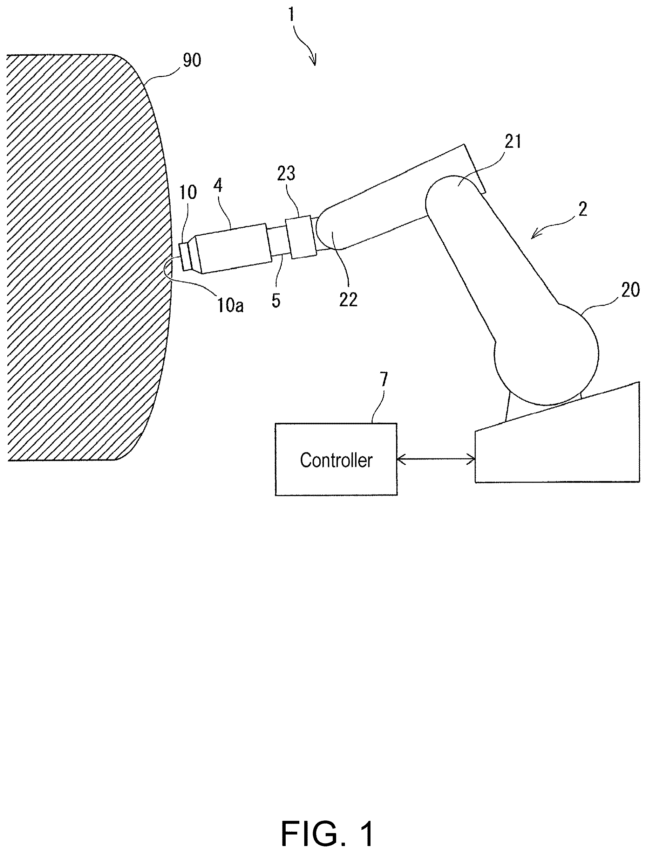

[FIG. 1] FIG. 1 is a diagram showing an example of a polishing apparatus used in an embodiment of the disclosure.

DESCRIPTION OF THE EMBODIMENTS

Embodiments of the disclosure will be described in detail. The following embodiments show examples of the disclosure, and the disclosure is not limited to the embodiments. In addition, various modifications or improvements can be made to the following embodiments, and forms with such modifications or improvements may also be included in the disclosure.

<Polishing Composition>

A polishing composition according to an embodiment of the disclosure (hereinafter, the present embodiment) includes abrasive grains, water, and a hydrophobic dispersion medium. The value of a shape parameter K, obtained by dividing the specific surface area ($m^2$/g) of the abrasive grains by the square of a particle diameter D50 ($\mu$m) is 0.6 or more and 60 or less. D50 is a particle diameter at which the cumulative volume from the large particle diameter side (or small particle diameter side) of the cumulative particle diameter distribution on a volume basis becomes 50%.

A polishing composition having such a configuration exhibits a high polishing rate and can efficiently remove scratches on a polishing target. Moreover, it is possible to improve the finished surface of the polishing target after polishing. For example, the polishing composition can reduce the number of processing scratches on the polishing target or reduce the depth of processing scratches, thereby bringing the color difference $\Delta$E of the finished surface close to 0 (zero). Therefore, a high-performance polishing composition can be provided. The color difference $\Delta$E will be described in the examples described later.

Hereinafter, each component contained in the polishing composition according to the present embodiment will be described with examples.

(I) Abrasive Grains

The polishing composition according to the present embodiment includes abrasive grains. The abrasive grains have a function of contacting the surface of a polishing target and mechanically polishing the polishing target. The polishing rate and the surface state of the polishing target after polishing (state of the finished surface) differ depending on the degree of surface irregularities of the abrasive grains. Therefore, it is important to grasp the degree of surface irregularities of the abrasive grains. Here, specific surface area ($m^2$/g) can be listed as a parameter related to the surface irregularities of the abrasive grains. The larger the degree of surface irregularities, the larger the specific surface area tends to become. On the other hand, the particle diameter of the abrasive grains relates to the specific surface area. The smaller the particle diameter of the abrasive grains, the larger the specific surface area tends to become.

Thus, the inventors of the disclosure intensively studied how to quantify the degree of surface irregularities of the abrasive grains. As a result, the inventors of the disclosure discovered that the degree of surface irregularities of the abrasive grains may be indicated by a value (shape parameter K) obtained by dividing the specific surface area ($m^2$/g) of the abrasive grains by the square of a particle diameter D50 ($\mu$m). D50 is the particle diameter (diameter) at which the cumulative volume from the large particle diameter side of the cumulative particle diameter distribution on a volume basis becomes 50%. The shape parameter K discovered by the inventors of the disclosure is quantified considering the specific surface area ($m^2$/g) of the abrasive grains that are secondary particles, including the relationship with the particle diameter of the abrasive grains that are secondary particles. Thereby, the shape parameter K can indicate the degree of surface irregularities of the abrasive grains.

Then, the inventors of the disclosure discovered that there is a suitable numerical range for this shape parameter K that increases the polishing rate and makes it possible to achieve a favorable finished surface after polishing. In the present embodiment, based on this discovery, the value of the shape parameter K of the abrasive grains is specified.

In the present embodiment, the shape parameter K of the abrasive grains may be 0.6 or more and 60 or less, 0.8 or more and 50 or less, 0.9 or more and 45 or less, or 1 or more and 40 or less. Thereby, the polishing target can be polished at a high polishing rate, and moreover, the finished surface after polishing can be improved. High performance of the polishing composition is possible.

Specific examples of the abrasive grains used in the present embodiment include, for example, metal oxides such as aluminum oxide (alumina), silicon oxide (silica), cerium oxide (ceria), zirconium oxide, titanium oxide (titania), tin oxide, manganese oxide, and iron oxide; metal carbides such as silicon carbide and titanium carbide; metal nitrides such as silicon nitride and titanium nitride; metal borides such as titanium boride and tungsten boride; silicate compounds such as zircon ($ZrSiO_4$); diamond; etc. The abrasive grains may be used alone or in combination of two or more. Moreover, the abrasive grains may be commercially available products or synthetic products.

Among these abrasive grains, at least one selected from the group consisting of metal oxides and metal carbides may be used from the viewpoint that abrasive grains having various particle diameters can be easily obtained and an excellent polishing rate can be achieved, silicon carbide, silicon dioxide, or metal oxides may be used, at least one of aluminum oxide (alumina), cerium oxide, and zirconium oxide may be used, and aluminum oxide may be used. Moreover, a mixture of alumina and zircon can also be used. In this specification, "polishing rate" may be rephrased as polishing removal rate.

Furthermore, among aluminum oxides, aluminum oxides containing $\alpha$-phase or transition state crystal phases that are in the process of becoming $\alpha$-phase, such as $\theta$-phase, $\delta$-phase, and $\gamma$-phase, may be suitable as crystal structures for polishing abrasive grains. The aluminum oxides may contain α-phase or 0-phase, and may contain α-phase. Moreover, regarding α-phase, it is considered that there is an optimal range depending on the degree of α-phase formation.

Generally, the α-phase crystal structure is considered to be the hardest, but it is estimated that the particle shape changes to be round and the polishing performance decreases when sufficiently sintered at high temperature to form α-phase. The α-conversion rate serves as a reference value representing the degree of α-phase contained in aluminum oxide. The lower limit of the α-conversion rate may be 50% or more. The lower limit of the α-conversion rate may be 60% or more, 70% or more, 80% or more, or 90% or more. Moreover, the upper limit of the α-conversion rate may be 100% or less. The upper limit of the α-conversion rate may be 98% or less. That is, the α-conversion rate of aluminum oxide may be 50% or more and 100% or less, or 60% or more and 98% or less.

By setting the α-conversion rate within the above range, improvement in polishing power, that is, acceleration of scratch removal rate and improvement in polishing rate, can be expected. The α-conversion rate of aluminum oxide particles can be calculated from the integrated intensity ratio of the (113) plane diffraction line by X-ray diffraction measurement using an X-ray diffraction apparatus (Ultima-IV, manufactured by Rigaku Corporation).

The specific surface area ($m^2$/g) of the abrasive grains may be 2.1 or more and 21 or less, 8 or more and 20 or less, 8 or more and 17 or less, or 12 or more and 15 or less. This makes it possible to achieve a good finished surface of the polishing target after polishing.

The lower limit of the volume average particle diameter (average secondary particle diameter) of the abrasive grains may be 0.05 μm or more, 0.1 μm or more, or 0.2 μm or more. As the volume average particle diameter (average secondary particle diameter) of the abrasive grains is 0.05 μm or more, the polishing rate can be improved, and the polishing target can be favorably polished in both rough polishing and finish polishing.

Moreover, the upper limit of the volume average particle diameter (average secondary particle diameter) of the abrasive grains may be 15 μm or less, 10 μm or less, 5 μm or less, 4 μm or less, or 3 μm or less. As the volume average particle diameter (average secondary particle diameter) of the abrasive grains becomes smaller, it becomes easier to achieve a good finished surface after polishing.

Therefore, as the volume average particle diameter (average secondary particle diameter) of the abrasive grains is 0.05 μm or more and 15 μm or less (or 0.05 μm or more and 10 μm or less), the polishing rate can be improved while achieving a good finished surface after polishing.

Abrasive grains having a large particle diameter before polishing but becoming smaller polishing particles at the interface between the buff and the polishing target during polishing (abrasive grains in which secondary particles collapse to become primary particles during polishing) may be used. From the above, the volume average particle diameter (average secondary particle diameter) of the abrasive grains may be 0.05 μm or more and 15 μm or less (or 0.05 μm or more and 10 μm or less), 0.1 μm or more and 10 μm or less, 0.2 μm or more and 5 μm or less, 0.2 μm or more and 4 μm or less, or 0.2 μm or more and 3 μm or less. In an embodiment, the volume average particle diameter (average secondary particle diameter) of the abrasive grains is 0.05 μm or more and 10 μm or less, 0.2 μm or more and 4 μm or less, and 0.2 μm or more and 3 μm or less.

In this specification, the volume average particle diameter of the abrasive grains is defined as the cumulative 50% particle diameter (D50) based on a volume-based particle size distribution. The D50 of the abrasive grains can be measured using a commercially available particle size measuring device. Such a particle size measuring device may be based on any method such as dynamic light scattering method, laser diffraction method, laser scattering method, or pore electrical resistance method. The measurement method and measuring device described in the examples can be listed as an example of the measurement method and measuring device for D50.

The lower limit of the content of abrasive grains in the polishing composition may be 0.1% by mass or more, 1% by mass or more, 5% by mass or more, 7% by mass or more, or 10% by mass or more, with respect to the total mass of the polishing composition. As the content of abrasive grains is 0.1% by mass or more, the polishing rate is improved, and the polishing target can be favorably polished in both rough polishing and finish polishing.

In addition, the upper limit of the content of abrasive grains in the polishing composition may be 50% by mass or less, 35% by mass or less, 30% by mass or less, 20% by mass or less, or 15% by mass or less, with respect to the total mass of the polishing composition. As the content of abrasive grains is 50% by mass or less, the manufacturing cost of the polishing composition is reduced, and what is more, the finished surface after polishing can be favorable.

In an embodiment, the abrasive grains are contained in an amount of 5% by mass or more and 30% by mass or less with respect to the total mass of the polishing composition.


(2) Other Examples of Abrasive Grains


In addition to the above configuration, abrasive grains having a particle size distribution width (D10-D90)/D50 of 0.1 or more and 4 or less may be used as the abrasive grains of the present embodiment. Here, D10 and D90 are particle diameters (diameters) at which the cumulative volumes from the large particle diameter side of the cumulative particle diameter distribution on a volume basis become 10% and 90% respectively. D10, D50, and D90 can be measured using a commercially available particle size measuring device.

Alternatively, in addition to the above configuration, abrasive grains having a particle size distribution width (D10-D90)/D50 of 0.4 or more and 2.0 or less and a specific surface area of 12 or more and 20 or less may be used as the abrasive grains of the present embodiment. Here, D10 and D90 are particle diameters (diameters) at which the cumulative volumes from the large particle diameter side of the cumulative particle diameter distribution on a volume basis become 10% and 90% respectively. D10, D50, and D90 can be measured using a commercially available particle size measuring device.

In these examples as well, the abrasive grains may contain, for example, aluminum oxide. As the aluminum oxide, it is possible to use sintered alumina having more irregularities on the surface compared to fused alumina.

By polishing the surface of a polishing target using a polishing composition containing such abrasive grains, the polishing target can be polished at a high polishing rate, and moreover, the finished surface after polishing can be favorable.

(3) Hydrophobic Dispersion Medium

The polishing composition according to the present embodiment includes a hydrophobic dispersion medium. The hydrophobic dispersion medium includes, for example, at least one selected from the group consisting of normal paraffinic hydrocarbon, isoparaffinic hydrocarbon, naphthenic hydrocarbon, and terpene hydrocarbon. The hydrophobic dispersion medium may have a vapor pressure at 20°C of 0.004 kPa or more and 2 kPa or less. The hydrophobic dispersion medium may have a flash point of 30°C or more and 100°C or less. By using such a hydrophobic dispersion medium, the processing efficiency (polishing removal rate) when performing a buff polishing process on a resin coating film is improved. Hereinafter, the normal paraffinic hydrocarbon, isoparaffinic hydrocarbon, naphthenic hydrocarbon, and terpene hydrocarbon that may be included in the hydrophobic dispersion medium may be referred to as "organic solvent".

The hydrophobic dispersion medium and organic solvent in the present embodiment may not easily dissolve in water. The hydrophobic dispersion medium and organic solvent may be commercially available products or synthetic products.

The normal paraffinic hydrocarbon, isoparaffinic hydrocarbon, naphthenic hydrocarbon, and terpene hydrocarbon may be mineral oil derived, and may be obtained by extracting and refining mineral oil derived components, or may be synthesized using mineral oil derived components as raw materials (mineral oil derived synthetic hydrocarbons). The normal paraffinic hydrocarbon, isoparaffinic hydrocarbon, naphthenic hydrocarbon, and terpene hydrocarbon may be mineral oil derived synthetic hydrocarbons. These hydrophobic organic solvents are generally known to have lower toxicity compared to other halogen-based or benzene-based organic solvents, and to have higher volatility compared to other polyethylene glycols or the like.

Examples of the normal paraffinic hydrocarbon include linear hydrocarbons having about 5 to 30 carbon atoms, liquid paraffin, kerosene, light oil, etc.

Examples of the isoparaffinic hydrocarbon include branched hydrocarbons having about 5 to 40 carbon atoms, liquid isoparaffin, etc.

Examples of the naphthenic hydrocarbon include cyclic hydrocarbons having about 5 to 40 carbon atoms, for example, monocyclic cycloparaffins such as cyclohexane, cyclopentane, and cyclononane; polycyclic cycloparaffins such as decalin; alkylcycloparaffins such as methylcyclopentane, methylcyclohexane, 1-methyl-4-isopropylcyclohexane, butylcyclohexane, and methyldecalin; etc.

Examples of the terpene hydrocarbon include chain terpene hydrocarbons such as myrcene, farnesene, and citral; and cyclic terpene hydrocarbons such as menthol, cineole, pinene, limonene, $\alpha$-terpinene, $\gamma$-terpinene, camphene, phellandrene, terpinene, terpinolene, p-cymene, and cedrene.

The hydrophobic dispersion medium may further include other organic solvents besides the above hydrocarbons. Hereinafter, organic solvents other than normal paraffinic hydrocarbon, isoparaffinic hydrocarbon, naphthenic hydrocarbon, and terpene hydrocarbon are referred to as "other organic solvents". Examples of such other organic solvents include methyl alcohol, ethyl alcohol, isopropyl alcohol, acetone, diethyl ether, ethyl acetate, butyl acetate, triethyl citrate, acetyltributyl citrate, acetyltriethyl citrate, etc.

The hydrophobic dispersion medium (organic solvent) generally has a flash point. The flash point is the lowest temperature at which a liquid, when heated at a constant rate of temperature rise and approached with a flame, generates vapor of the concentration necessary for instantaneous ignition. The flash point can also be said to be the lowest temperature at which the hydrophobic dispersion medium can volatilize and form a combustible mixture with air. There are various methods for measuring the flash point depending on the purpose of measurement and the properties of the sample. Methods for measuring the flash point include closed cup methods and open cup methods. Examples of closed cup methods include the Tag closed cup method (JIS K 2265-1:2007), Seta closed cup method (JIS K 2265-2:2007), Pensky-Martens closed cup method (JIS K 2265-3:2007), etc. Examples of open cup methods include Cleveland open cup method (JIS K 2265-4:2007), etc.

(4) Water

The polishing composition according to the present embodiment includes water. As the water, from the viewpoint of suppressing inhibition of the action of other components, water containing as few impurities as possible may be used. Specifically, pure water or ultrapure water from which foreign matter has been removed through a filter after removing impurity ions with ion exchange resin, or distilled water may be used.

The lower limit of the content of water in the polishing composition may be 1% by mass or more, 5% by mass or more, 10% by mass or more, 15% by mass or more, or 20% by mass or more, with respect to the total mass of the polishing composition. In addition, the upper limit of the content of water in the polishing composition may be 90% by mass or less, 85% by mass or less, 80% by mass or less, 75% by mass or less, or 70% by mass or less, with respect to the total mass of the polishing composition.

That is, the content of water in the polishing composition may be 1% by mass or more and 90% by mass or less, 5% by mass or more and 85% by mass or less, 10% by mass or more and 80% by mass or less, 15% by mass or more and 75% by mass or less, or 20% by mass or more and 70% by mass or less. As the content of water is within the above range, the polishing rate can be improved, and the polishing target can be favorably polished in both rough polishing and finish polishing.

(5) Surfactant

The polishing composition according to the present embodiment includes a surfactant. The surfactant disperses or emulsifies the hydrophobic dispersion medium or water. The surfactant imparts hydrophilicity to the polished surface after polishing to improve the cleaning efficiency of the polished surface after polishing, and therefore there may be less adhesion of dirt to the polished surface.

The surfactant included in the polishing composition of the disclosure is one or more selected from the group consisting of anionic surfactants, cationic surfactants, amphoteric surfactants, and nonionic surfactants. Among these, as the surfactant included in the polishing composition, nonionic surfactants may be used. These surfactants may be used alone or in combination of two or more.

Examples of the anionic surfactants include polyoxyethylene alkyl ether acetic acid, polyoxyethylene alkyl sulfate ester, alkyl sulfate ester, polyoxyethylene alkyl ether sulfate, alkyl ether sulfate, alkylbenzene sulfonic acid, alkyl phosphate ester, polyoxyethylene alkyl phosphate ester, polyoxyethylene sulfosuccinic acid, alkyl sulfosuccinic acid, alkyl naphthalene sulfonic acid, alkyl diphenyl ether disulfonic acid, and salts thereof, etc.

Examples of the cationic surfactants include alkyltrimethylammonium salts, alkyldimethylammonium salts, alkylbenzyldimethylammonium salts, alkylamine salts, etc.

Examples of the amphoteric surfactants include alkyl betaine, alkylamine oxide, etc.

Examples of the nonionic surfactants include polyoxyalkylene alkyl ethers such as polyoxyethylene alkyl ether, sorbitan fatty acid esters, glycerin fatty acid esters, polyoxyethylene fatty acid esters, polyoxyethylene alkylamines, alkylalkanolamides, etc.

In the polishing composition of the disclosure, in the case where the hydrophobic dispersion medium includes isoparaffinic hydrocarbon, the surfactant may be polyoxyalkylene alkyl ether (HLB=10 to 14) from the viewpoint of emulsification stability. Here, the HLB (Hydrophilic-Lipophilic Balance) value is a value representing the degree of affinity of the surfactant for water and oil (organic compounds insoluble in water). Examples of polyoxyalkylene alkyl ethers include alkyl ethers having 10 to 20 carbon atoms to which polyoxyethylene is added, such as polyoxyethylene lauryl ether, polyoxyethylene myristyl ether, polyoxyethylene cetyl ether, polyoxyethylene stearyl ether, polyoxyethylene oleyl ether, and polyoxyethylene octyldodecyl ether. The number of moles of polyoxyethylene added to the polyoxyalkylene alkyl ether may be any number of moles added such that the HLB becomes 10 to 14.

The content of the surfactant in the polishing composition may be 0.01% by mass or more, or 0.1% by mass or more, with respect to the total mass of the polishing composition. Further, the content of the surfactant in the polishing composition may be 3.0% by mass or less, or 2.0% by mass or less, with respect to the total mass of the polishing composition. In the case where the content of the surfactant is within the above range, the stability of the emulsion in the polishing composition increases.

For example, the HLB value indicating the affinity of the surfactant for water and oil is 10 or more and 16 or less, and may be 10 or more and 14 or less.

(6) Other Examples of Surfactant

The surfactant of the present embodiment may include polyoxyethylene alkyl ether represented by formula (i) $RO\text{-}(AO)_n\text{-}H$. In formula (i), R is a branched alkyl group having 12 to 20 carbon atoms. n represents the average number of moles of AO added, and is 3 or more and 50 or less. The average number of moles added n may be 5 or more and 20 or less, or 5 or more and 15 or less. AO refers to alkylene oxide.

The surfactant including polyoxyethylene alkyl ether represented by formula (i) disperses or emulsifies the hydrophobic dispersion medium or water. Further, this surfactant imparts hydrophilicity to the polished surface after polishing to improve the cleaning efficiency of the polished surface after polishing, and therefore there may be less adhesion of dirt to the polished surface. Furthermore, this surfactant contributes to stability after emulsification.

The surfactant of the present embodiment includes, as the polyoxyethylene alkyl ether represented by formula (i), for example, at least one selected from the group consisting of polyoxyethylene alkyl ether (C12 to C14 secondary alcohol), polyoxyethylene octyldodecyl ether, and polyoxyethylene 2-hexyldecyl ether. C12 to C14 indicates that in the polyoxyethylene alkyl ether represented by formula (i), the carbon number of R is 12, 13, 14, or a mixture of two or more of these (the same applies hereinafter).

The polyoxyethylene alkyl ether represented by formula (i) may also be called polyoxyethylene secondary alcohol ether, secondary alcohol ethoxylate (secondary alcohol ethoxylate), polyoxyethylene alkyl ether (secondary alcohol), or polyoxyethylene secondary alkyl ether. Any of these designations has the same structure as the polyoxyethylene alkyl ether represented by formula (i).

(7) Various Additives

The polishing composition according to the present embodiment may include various additives such as pH adjuster, polishing accelerator, oxidizing agent, dispersant, viscosity adjuster, complexing agent, anticorrosive agent, and antifungal agent, in order to improve the performance. Examples of the additives that can be blended in the polishing composition of the present embodiment will be described below.

(7.1) pH Adjuster

The polishing composition according to the present embodiment may include a pH adjuster. The pH value of the polishing composition can be adjusted by adding a pH adjuster. The pH adjuster used as necessary to adjust the pH value of the polishing composition to a desired value may be either acid or alkali, and may be either an inorganic compound or an organic compound.

Specific examples of acids as the pH adjuster include inorganic acids and organic acids such as carboxylic acids and organic sulfuric acids. Specific examples of inorganic acids include sulfuric acid, nitric acid, boric acid, carbonic acid, hypophosphorous acid, phosphorous acid, phosphoric acid, etc. Specific examples of carboxylic acids include formic acid, acetic acid, propionic acid, butyric acid, valeric acid, 2-methylbutyric acid, n-hexanoic acid, 3,3-dimethylbutyric acid, 2-ethylbutyric acid, 4-methylpentanoic acid, n-heptanoic acid, 2-methylhexanoic acid, n-octanoic acid, 2-ethylhexanoic acid, benzoic acid, glycolic acid, salicylic acid, glyceric acid, oxalic acid, malonic acid, succinic acid, glutaric acid, adipic acid, pimelic acid, maleic acid, phthalic acid, malic acid, tartaric acid, citric acid, lactic acid, etc. Furthermore, specific examples of organic sulfuric acids include methanesulfonic acid, ethanesulfonic acid, isethionic acid, etc. These acids may be used alone or in combination of two or more.

Specific examples of bases as the pH adjuster include alkali metal hydroxides or salts thereof, alkaline earth metal hydroxides or salts thereof, quaternary hydroxide ammonium or salts thereof, ammonia, amines, etc.

Specific examples of alkali metals include potassium, sodium, etc. Specific examples of alkaline earth metals include calcium, strontium, etc. Furthermore, specific examples of salts include carbonates, hydrogen carbonates, sulfates, acetates, etc. Furthermore, specific examples of quaternary ammonium include tetramethylammonium, tetraethylammonium, tetrabutylammonium, etc.

The quaternary hydroxide ammonium compound includes quaternary hydroxide ammonium or salts thereof. Specific examples include tetramethylammonium hydroxide, tetraethylammonium hydroxide, tetrabutylammonium hydroxide, etc.

Furthermore, specific examples of amines include methylamine, dimethylamine, trimethylamine, ethylamine, diethylamine, triethylamine, ethylenediamine, monoethanolamine, N-(β-aminoethyl)ethanolamine, hexamethylenediamine, diethylenetriamine, triethylenetetramine, anhydrous piperazine, piperazine hexahydrate, 1-(2-aminoethyl)piperazine, N-methylpiperazine, guanidine, etc. These bases may be used alone or in combination of two or more.

Among these bases, ammonia, ammonium salts, alkali metal hydroxides, alkali metal salts, quaternary hydroxide ammonium compounds, and amines may be used, and furthermore, ammonia, potassium compounds, sodium hydroxide, quaternary hydroxide ammonium compounds, ammonium hydrogen carbonate, ammonium carbonate, sodium hydrogen carbonate, and sodium carbonate may be used.

In addition, from the viewpoint of reducing metal contamination, it is possible that the polishing composition includes a potassium compound as a base. Examples of the potassium compound include potassium hydroxides or potassium salts, and specific examples include potassium hydroxide, potassium carbonate, potassium hydrogen carbonate, potassium sulfate, potassium acetate, potassium chloride, etc.

Further, instead of the aforementioned acids or in combination with the aforementioned acids, salts such as ammonium salts or alkali metal salts of the acids may be used as a pH adjuster that serves as a buffering agent. In particular, in the case of combining the acids with buffering agents as combinations of weak acids and strong bases, strong acids and weak bases, or weak acids and weak bases, a pH buffering effect can be expected.

(7.2) Polishing Accelerator (Oxidizing Agent)

The polishing composition according to the present embodiment may include a polishing accelerator. The polishing accelerator plays a role in chemically polishing the polishing target, and can significantly increase the polishing rate by acting on the outer surface of the resin coating film.

Specific examples of the polishing accelerator include polishing accelerators including at least one salt selected from the group consisting of metal salts of inorganic acids, metal salts of organic acids, ammonium salts of inorganic acids, and ammonium salts of organic acids.

The inorganic acid may be any of nitric acid, sulfuric acid, and hydrochloric acid. The organic acid may be any of oxalic acid, lactic acid, acetic acid, formic acid, citric acid, tartaric acid, malic acid, gluconic acid, glycolic acid, and malonic acid. The metal salt may be any of aluminum salt, nickel salt, lithium salt, magnesium salt, sodium salt, and potassium salt. These polishing accelerators may be used alone or in combination of two or more.

In addition, an oxidizing agent may be added as a polishing accelerator. Specific examples of the oxidizing agent include hydrogen peroxide, peroxides, nitrates, iodates, periodates, hypochlorites, chlorites, chlorates, perchlorates, persulfates, dichromates, permanganates, ozone water, silver(II) salts, iron(III) salts, etc.

(7.3) Dispersant/Viscosity Adjuster (Thickening Agent)

The polishing composition according to the present embodiment may include a dispersant or thickening agent. The dispersant or thickening agent enables abrasive grains (polishing material) to act efficiently on the polishing target by uniformly dispersing the abrasive grains in the liquid, thereby contributing to improvement of the polishing rate. Further, the presence of the dispersant or thickening agent among the abrasive grains can be expected to have an effect of suppressing caking of the abrasive grains. This suppresses the occurrence of scratches (processing scratches) caused by agglomerated abrasive grains.

Specific examples of the dispersant include colloidal substances as substances including fine particles, such as colloidal alumina, colloidal silica, colloidal zirconia, colloidal titania, alumina sol, silica sol, zirconia sol, titania sol, fumed alumina, fumed silica, fumed zirconia, fumed titania, etc. Sodium phosphate, sodium hexametaphosphate, sodium pyrophosphate, etc., which are generally used as dispersants, may also be used.

Additionally, specific examples of the thickening agent include glycols such as propylene glycol polymers and ethylene glycol polymers, and polymer compounds. More specifically, examples of glycols include propylene glycol, ethylene glycol, dipropylene glycol, polypropylene glycol, diethylene glycol, polyethylene glycol, etc. Examples of polymer compounds include sodium polyacrylate, polyvinyl alcohol, hydroxyethyl cellulose, etc.

(7.4) Complexing Agent

The polishing composition according to the present embodiment may include an agent having chelating action (complexing agent). Since the complexing agent traps metal ions derived from the polishing apparatus, polishing target, etc., the complexing agent can be expected to suppress metal contamination of the polished surface caused by metal ions and provide a good finished surface after polishing.

Examples of the complexing agent include organic acids, amino acids, nitrile compounds, and chelating agents other than these. Specific examples of organic acids include oxalic acid, malonic acid, succinic acid, glutaric acid, adipic acid, pimelic acid, maleic acid, phthalic acid, malic acid, tartaric acid, citric acid, etc. Instead of or in combination with organic acids, salts such as alkali metal salts of organic acids may be used.

Specific examples of amino acids include glycine, α-alanine, β-alanine, N-methylglycine, N,N-dimethylglycine, 2-aminobutyric acid, norvaline, valine, leucine, norleucine, isoleucine, phenylalanine, proline, sarcosine, ornithine, lysine, taurine, serine, threonine, homoserine, tyrosine, bicine, tricine, 3,5-diiodo-tyrosine, β-(3,4-dihydroxyphenyl)-alanine, thyroxine, 4-hydroxy-proline, cysteine, methionine, ethionine, lanthionine, cystathionine, cystine, cysteic acid, aspartic acid, glutamic acid, S-(carboxymethyl)-cysteine, 4-aminobutyric acid, asparagine, glutamine, azaserine, arginine, canavanine, citrulline, δ-hydroxy-lysine, creatine, histidine, 1-methyl-histidine, 3-methyl-histidine, tryptophan, etc.

Specific examples of nitrile compounds include acetonitrile, aminoacetonitrile, propionitrile, butyronitrile, isobutyronitrile, benzonitrile, glutarodinitrile, methoxyacetonitrile, etc.

Specific examples of chelating agents other than these include iminodiacetic acid, nitrilotriacetic acid, diethylenetriaminepentaacetic acid, ethylenediaminetetraacetic acid, N,N,N-trimethylenephosphonic acid, ethylenediamine-N,N,N',N'-tetramethylenesulfonic acid, transcyclohexanediaminetetraacetic acid, 1,2-diaminopropanetetraacetic acid, glycol etherdiaminetetraacetic acid, ethylenediamineorthohydroxyphenylacetic acid, ethylenediaminedisuccinic acid (SS form), N-(2-carboxylateethyl)-L-aspartic acid, β-alaninediacetic acid, 2-phosphonobutane-1,2,4-tricarboxylic acid, 1-hydroxyethylidene-1,1-diphosphonic acid, N,N'-bis(2-hydroxybenzyl)ethylenediamine-N,N'-diacetic acid, 1,2-dihydroxybenzene-4,6-disulfonic acid, etc. These complexing agents may be used alone or in combination of two or more.

(7.5) Regarding Anticorrosive Agent

The polishing composition according to the present embodiment may include an anticorrosive agent. Since the anticorrosive agent forms a protective film on metal surface, the anticorrosive agent may be expected to reduce corrosion of the polishing apparatus, polishing target, fixing jigs, etc.

The anticorrosive agent that can be used is not particularly limited, and is, for example, a heterocyclic compound or a surfactant. The number of members in the heterocycle in the heterocyclic compound is not particularly limited. Further, the heterocyclic compound may be a monocyclic compound or a polycyclic compound having a condensed ring. The anticorrosive agent may be used alone or in combination of two or more.

Specific examples of heterocyclic compounds that can be used as the anticorrosive agent include nitrogen-containing heterocyclic compounds such as pyrrole compounds, pyrazole compounds, imidazole compounds, triazole compounds, tetrazole compounds, pyridine compounds, pyrazine compounds, pyridazine compounds, pyrimidine compounds, indolizine compounds, indole compounds, isoindole compounds, indazole compounds, purine compounds, quinolizine compounds, quinoline compounds, isoquinoline compounds, naphthyridine compounds, phthalazine compounds, quinoxaline compounds, quinazoline compounds, cinnoline compounds, pteridine compounds, thiazole compounds, isothiazole compounds, oxazole compounds, isoxazole compounds, and furazan compounds.

(7.6) Antifungal Agent, Preservative

The polishing composition according to the present embodiment may include an antifungal agent and a preservative. Specific examples of the antifungal agent and preservative include isothiazoline preservatives (for example, 2-methyl-4-isothiazolin-3-one, 5-chloro-2-methyl-4-isothiazolin-3-one), paraoxybenzoic acid esters, and phenoxyethanol. These antifungal agents and preservatives may be used alone or in combination of two or more.

<Method for Producing Polishing Composition>

The method for producing a polishing composition according to the present embodiment includes a step of mixing abrasive grains, a hydrophobic dispersion medium, and water to produce the polishing composition. The value of a shape parameter K, obtained by dividing a specific surface area ($m^2$/g) of the abrasive grains by the square of a particle diameter D50 ($\mu$m), is 0.6 or more and 60 or less.

According to this, it is possible to produce a high-performance polishing composition that can polish a polishing target at a high polishing rate and can improve the finished surface after polishing.

In this production method, it is possible to mix the hydrophobic dispersion medium and a surfactant in advance, and then mix with water and abrasive grains. In addition, in the case where the polishing composition of the disclosure includes hydrophilic components such as a thickening agent and an emulsification stabilizer, it is possible to prepare a hydrophobic mixture by mixing the hydrophobic dispersion medium and the surfactant in advance, prepare a hydrophilic mixture by mixing water and the hydrophilic components, and then mix the hydrophobic mixture, the hydrophilic mixture, and the abrasive grains.

In addition, in the case where the polishing composition of the disclosure includes other components such as a pH adjuster, after mixing the hydrophobic dispersion medium, the surfactant, water, and the abrasive grains, other components such as a pH adjuster may be stirred and mixed as necessary.

The temperature when mixing the components is not particularly limited, but for example, may be 10°C or more and 40°C or less. In addition, the mixing time is not particularly limited.

(1) Specific Example of Method for Producing Abrasive Grains

The method for producing abrasive grains (secondary particles) will be further described with specific examples. As described above, in the present embodiment, the abrasive grains may be aluminum oxide (alumina). The method for producing alumina is not particularly limited, but as an example, powder obtained by firing starting materials such as aluminum oxide precursor powder may be appropriately pulverized and/or classified.

The shape of the abrasive grains including the degree of surface irregularity can be controlled by the types of starting materials for aluminum oxide and the firing conditions.

The aluminum oxide precursor powder may be aluminum hydroxide powder or aluminum oxide powder containing a transitional aluminum oxide phase. The aluminum hydroxide powder may be gibbsite, boehmite, pseudoboehmite, diaspore, or any combination of these. The aluminum oxide precursor powder can include gamma ($\gamma$), eta ($\eta$), theta ($\theta$), chi ($\chi$), kappa ($\kappa$), and/or delta ($\delta$) phase aluminum oxide.

Aluminum oxide (alumina) can be formed by firing the above aluminum oxide precursor powder. The firing method is not particularly limited, but as an example, a rotary kiln, tunnel kiln, electric furnace, muffle furnace, elevator kiln, or pusher kiln can be used. The firing conditions may be a firing temperature of about 700°C to 1600°C and a firing time of about 1 hour to 48 hours. Thereby, $\alpha$-alumina having a suitable $\alpha$-conversion rate can be obtained. The higher the firing temperature and the longer the firing time, the smaller the degree of surface irregularity tends to become, that is, the specific surface area tends to become smaller.

Alumina having a desired particle diameter distribution can be obtained by appropriately pulverizing and classifying the fired alumina powder. The pulverization and classification can be performed by wet or dry processes.

As examples of the pulverization method, various devices including roller mills, jet mills, high-speed rotary pulverizers, and container-driven mills can be used. In each device, alumina having a desired particle size distribution can be obtained by changing pulverization conditions such as pulverization time.

As examples of the classification method, various methods including filtering (filtration), sieving, air classification, elutriation classification, gravity classification, inertial classification, and centrifugal classification can be used. As examples of filtering, various filtration techniques including coarse filtration, microfiltration, ultrafiltration, and reverse osmosis can be used. Examples of filters used for filtering include mesh filters, depth filters, and membrane filters. In filtering, the particle size distribution of the powder can be controlled by filtration time, filtration rate, and filtration accuracy. For example, the filtration accuracy may be 0.1 $\mu$m to 300 $\mu$m.

Alumina having a desired particle size distribution and specific surface area can be obtained by appropriately selecting and/or combining one or more of the above-described firing method, pulverization method, and classification/-filtering method and controlling respective conditions. This makes it possible to obtain alumina in which the value of the shape parameter K, obtained by dividing the specific surface area (m$^2$/g) by the square of the particle diameter D50 ($\mu$m), is 0.6 or more and 60 or less.

<Polishing Target>

The polishing target according to the present embodiment is not particularly limited, but may include at least one selected from the group consisting of an alloy material, a resin material, a metal, a metalloid, a metal oxide, a metal carbide, a metal nitride, a metalloid oxide, a metalloid carbide, a metalloid nitride, and a glass material, and may also be a composite material of these materials. In particular, a resin material (resin coating film) used for coated surfaces of an automobile body or the like may be used. That is, the polishing composition of the present embodiment may be for resin polishing.

The type of the resin coating film is not particularly limited, but the resin constituting the resin coating film may be, for example, urethane resin or acrylic resin, and the type of the resin may be urethane resin, acrylic resin alone, or a mixture of these. Furthermore, the resin coating film may be a transparent clear coating film. In addition, the thickness of the resin coating film is not particularly limited, but may be 100 $\mu$m or less, or may be 10 $\mu$m or more and 40 $\mu$m or less. The hardness of the resin can be adjusted by the drying temperature, and generally, the resin can be soft at a drying temperature around 60°C and hard at a drying temperature around 140°C. In the case of applying the polishing composition according to the present embodiment to the buff polishing process of such a resin coating film, the resin coating film can be polished at a high polishing rate, and moreover, the finished surface of the resin coating film after polishing can be favorable.

The polishing composition of the present embodiment can be used for producing a coated member in which a resin coating film is coated on the surface of a substrate. In the case of polishing the outer surface of the resin coating film of the coated member using the polishing composition of the present embodiment, even if there is a period of time before wiping, cloudiness hardly remains on the surface of the polishing target, and it is possible to produce a coated member including a resin coating film that has beautiful gloss.

The type of the coated member (that is, the application of the resin coating film) is not limited to an automobile body. The type of the coated member is not particularly limited, and may include, for example, railway vehicle, aircraft, resin member, etc.

<Polishing Method>

The polishing method according to the present embodiment includes a step of polishing a polishing target using the above-described polishing composition or a polishing composition obtained by the above-described production method.

In the step of polishing the polishing target, for example, the polishing composition is supplied to a surface of the resin coating film that is the polishing target, and polishing is performed by bringing a polishing buff into contact with the surface to which the polishing composition has been supplied. For example, a wool buff or a sponge buff, or both are used as the polishing buff.

The configuration of the polishing apparatus is not particularly limited, and may be a polisher that can be held by hand by an operator (hereinafter also referred to as a hand polisher), a single-side polishing machine, a double-side polishing machine, a lens polishing machine, a vertical electric polishing machine, a general polishing apparatus such as a grinder, or an automatic polishing apparatus.

In the case of using a hand polisher, the operator manually moves the hand polisher to polish the surface of the polishing target (for example, resin coating film). The driving means of the hand polisher is not particularly limited, but generally single action, double action, gear action, etc. are used, and double action may be used for the polishing of a resin coating film.

In the case of using an automatic polishing apparatus, the automatic polishing apparatus moves a robot arm under the control of a controller to polish the surface of the polishing target (for example, resin coating film).

<Polishing Apparatus>

FIG. 1 is a diagram showing an example of a polishing apparatus used in an embodiment of the disclosure. An automatic polishing apparatus 1 of FIG. 1 includes a robot arm 2, a polishing buff 10, a polishing tool 4, a pressing force detection part 5, and a controller 7. Since the robot arm 2 has multiple joints 20, 21, and 22, a tip portion 23 to which the polishing buff 10, the polishing tool 4, and the pressing force detection part 5 are attached can be moved in multiple directions. A polishing target 90 is, for example, an automobile body or the like whose surface is coated with a resin coating film.

The polishing tool 4 is attached to the tip portion 23 via the pressing force detection part 5, and rotates the polishing buff 10 by a built-in driving means with a direction perpendicular to a polishing surface 10a of the polishing buff 10 as a rotation axis. The controller 7 controls the behavior of the robot arm 2 and the rotation of the polishing buff 10 by the polishing tool 4. The polishing composition is supplied between the polishing surface 10a of the polishing buff 10 and a resin coated surface of the polishing target 90 from a polishing composition supply mechanism not shown here.

The controller 7 polishes the resin coated surface by pressing the polishing surface 10a of the polishing buff 10 against the resin coated surface of the polishing target 90 with the robot arm 2, and rotating the polishing buff 10. The pressing force detection part 5 detects the pressing force of the polishing surface 10a of the polishing buff 10 against the resin coated surface. The controller 7 may adjust the force for pressing the polishing surface 10a against the resin coated surface based on the detection result of the pressing force from the pressing force detection part 5. Additionally, the controller 7 may control the robot arm 2 so that the polishing buff 10 moves on the resin coated surface while keeping the pressing force of the polishing surface 10a against the resin coated surface constant, based on the detection result of the pressing force from the pressing force detection part 5.

The material of the polishing buff 10 is not particularly limited, and general nonwoven fabric, suede, wool buff, woven fabric, polyurethane foam, polyethylene foam, porous fluororesin, etc. can be used without particular restriction. The polishing buff 10 used may have grooves for accumulating a liquid polishing composition on the polishing surface 10a.

<Example>

Examples and comparative examples are shown below to describe the disclosure more specifically. However, the technical scope of the disclosure is not limited only to the following examples. The step of polishing a polishing target using the polishing compositions according to the following examples and comparative examples was performed under conditions of room temperature (20°C or higher and 25°C or lower)/relative humidity 30%RH or higher and 50%RH or lower.

Table 1 shows the composition (type, shape parameter K, D50, specific surface area SA) of the polishing compositions according to the examples of the disclosure and comparative examples, the polishing rate and color difference ΔE in the case of polishing with double action using a wool buff, and the polishing rate and color difference ΔE in the case of polishing with double action using a sponge buff.

(Preparation of Polishing Compositions of Examples 1 to 6 and Comparative Examples 1 to 4)

To 16% by mass (hereinafter, wt%) of hydrophobic dispersion medium, 1.6 wt% of surfactant was added to prepare a solution of hydrophobic dispersion medium. Next, 1.0 wt% of polyacrylic acid polymer (thickening agent) and 2.0 wt% of glycerin (emulsification stabilizer) were mixed with water, and this solution was added to the solution of hydrophobic dispersion medium and stirred at room temperature (25°C), after which 12 wt% of abrasive grains shown in Table 1 were added. To the obtained dispersion liquid, preservative was added, and sodium hydroxide was added as alkali to adjust the pH to 9.0, thereby preparing each polishing composition of Examples 1 to 6 and Comparative Examples 1 to 4 as O/W type emulsion.

In Table 1, columns marked with "-" mean no data.

[Table 1]

| | | Abrasive grains | | | Wool buff (double) | | Sponge buff (double) | | |
|---|---|---|---|---|---|---|---|---|---|
| | Type | Shape parameter K SA/(D50)$^2$ | D50 [$\mu$m] | Specific surface area SA [m$^2$/g] | Polishing rate [$\mu$m/min] | Color difference $\Delta$E | Polishing rate [$\mu$m/min] | Color difference $\Delta$E | Evaluation |
| Example 1 | Alumina | 1.03 | 2.89 | 8.58 | 1.80 | 4.9 | 1.04 | 2.4 | ○ |
| Example 2 | Alumina | 7.34 | 1.28 | 12.04 | 1.54 | 4.7 | 1.06 | 1.1 | ○ |
| Example 3 | Alumina | 24.72 | 0.76 | 14.09 | 1.31 | 1.9 | 0.82 | 1.0 | ○ |
| Example 4 | Alumina | 39.13 | 0.62 | 14.85 | 0.92 | 0.7 | 0.60 | 0.3 | ○ |
| Example 5 | Alumina | 0.96 | 3.11 | 9.33 | 1.66 | 4.7 | 1.19 | 1.7 | ○ |
| Example 6 | Alumina | 43.29 | 0.61 | 16.11 | 1.00 | 1.2 | 0.61 | 0.4 | ○ |
| Comparative Example 1 | Alumina | 0.19 | 3.27 | 2.03 | 1.38 | 10.4 | 0.79 | 4.2 | × |
| Comparative Example 2 | Alumina | 69.05 | 0.56 | 21.88 | 0.73 | 2.2 | 0.45 | 0.5 | × |
| Comparative Example 3 | Alumina | 208.62 | 0.43 | 38.52 | - | - | 0.29 | 0.3 | × |
| Comparative Example 4 | Alumina | 1657.89 | 0.19 | 59.85 | - | - | 0.27 | 0.2 | × |

In Examples 1 to 6 and Comparative Examples 1 to 4, the following abrasive grains, hydrophobic dispersion medium, and surfactant were used.

(Abrasive Grains)

In each of Examples 1 to 6 and Comparative Examples 1 to 4, abrasive grains having a composition of aluminum oxide (alumina) and an $\alpha$-conversion rate of 95% were used as the abrasive grains. The average secondary particle diameter (D50), specific surface area SA, and shape parameter K of the abrasive grains are as described in Table 1.

The measurement of the $\alpha$-conversion rate of aluminum oxide particles was performed using an X-ray analysis apparatus (Ultima-IV, manufactured by Rigaku Corporation), and as a reference material, commercially available $\alpha$-alumina single crystal particles ($\alpha$-conversion rate: 100%) having a sufficiently high firing temperature and sufficiently advanced $\alpha$-conversion were used. The integrated intensity of the (113) plane diffraction line was measured by X-ray diffraction measurement of the reference material and the target abrasive grains (aluminum oxide particles), and the $\alpha$-conversion rate of the target abrasive grains (aluminum oxide particles) was calculated from the integrated intensity ratio of the (113) plane diffraction line of the target abrasive grains with respect to the reference material.

Further, the average secondary particle diameter (D50) of each abrasive grain was measured by the pore electrical resistance method using Multisizer 3 (manufactured by Beckman Coulter, Inc.). Since the abrasive grains of Comparative Examples 2 to 4 have small particle diameters and it is impossible to measure the average secondary particle diameter (D50) using the above measuring device, 100 particles were randomly selected from images taken with a scanning electron microscope (SEM) (product name: SU8000, manufactured by Hitachi High-Tech Corporation), the particle diameter of each particle was measured, and the average value thereof was taken as the average secondary particle diameter (D50).

(Hydrophobic Dispersion Medium)

The following was used as the hydrophobic dispersion medium: synthetic hydrocarbon (isoparaffinic hydrocarbon) derived from mineral oil, having a flash point of 63°C (closed cup method), a total content of benzene-based organic solvent and halogen-based organic solvent of 0.5% by mass or less, and a vapor pressure of 0.05 kPa (molecular weight 170). The vapor pressure is the value at 20°C.

(Surfactant)

Polyoxyalkylene alkyl ether having an HLB of 13.3 was used as the surfactant.

(Polishing Target)

A composite material having a clear coating film coated with synthetic resin paint on the surface of a steel plate and baked at 60°C was used as the polishing target. The pencil hardness of the clear coating film after baking is F.

(Polishing Machine)

A double action polisher LHR12E (manufactured by Rupes) was used as the polishing machine.

(Polishing Conditions)

The polishing conditions are as follows.

(1) Polishing test using sponge buff

· Buff: sponge buff

· Pressing load: 4 kg

· Polisher rotation speed: 5300 rpm

· Polishing linear speed: 200 m/min

· Flow rate of polishing composition: 0.4 g/15 seconds

· Polishing time: 180 seconds

· Polishing area: 300×400 mm

(2) Polishing test using wool buff

· Buff: wool buff (hair length: approximately 15 mm)

· Pressing load: 4 kg

· Polisher rotation speed: 5300 rpm

· Polishing linear speed: 200 m/min

· Flow rate of polishing composition: 0.8 g/20 seconds

· Polishing time: time when clear coating film was dry-sanded using #3000 paper and removal could be confirmed visually

. Polishing area: 400×600 mm

(Evaluation of Polishing Rate)

The inventors of the disclosure conducted polishing tests using sponge buff (hereinafter referred to as sponge buff test) on the polishing compositions of Examples 1 to 6 and Comparative Examples 1 to 4, and measured the polishing rate [μm/min]. Further, for the polishing compositions of Examples 1 to 6 and Comparative Examples 1 and 2, not only sponge buff tests but also polishing tests using wool buff (hereinafter referred to as wool buff test) were conducted to measure the polishing rate [μm/min]. Specifically, an electromagnetic induction type film thickness measuring device (SWT-9200, Sanko Electronic Laboratory Co., Ltd.) was used to measure the film thickness of each film before and after polishing. Then, the removal amount (polishing amount) was calculated from the film thickness difference before and after polishing, and the polishing rate was calculated from the removal amount.

As a result, as shown in Table 1, Examples 1 to 6 had polishing rates of 0.92 [μm/min] or higher in the wool buff test and 0.60 [μm/min] or higher in the sponge buff test, and the polishing rates were high values in both tests.

On the other hand, Comparative Example 2 had a polishing rate of 0.73 [μm/min] in the wool buff test and 0.45 [μm/min] in the sponge buff test, and the polishing rates were low values in both tests. Comparative Examples 3 and 4 had no data for the wool buff test, but the polishing rates in the sponge buff test were 0.29 [μm/min] or lower, which were low values.

(Evaluation of Color Difference ΔE)

The state of the finished surface of the polishing target can be evaluated by measuring the color difference ΔE. The smaller the color difference ΔE, that is, the closer to 0 (zero), the better the state of the finished surface can be said to be. Here, the color difference ΔE is a numerical representation of the color difference (difference in surface state roughness) between two measured coating film surfaces, and is calculated by the following formula (ii).

$$\text{Color difference } \Delta E = \sqrt{(L2-L1)^2+(a2-a1)^2+(b2-b1)^2} \text{ ... formula (ii)}$$

In formula (ii), L represents lightness, and a and b represent hue and saturation.

Using formula (ii), the color difference ΔE of the coated surface after polishing is calculated based on the coating film surface after coating (that is, the new coated surface). The closer the color difference ΔE value is to 0, the fewer or shallower the processing scratches, and the coating film surface after coating and the coating film surface after polishing have equivalent appearance. On the other hand, in the case of a large color difference ΔE value, there are many or deep processing scratches, and there is a difference in appearance between the coating film surface after coating and the coating film surface after polishing.

The evaluation apparatus and measurement conditions for color difference ΔE are as follows.

· Evaluation apparatus: Multi-angle type spectrophotometer CM-512m3A (manufactured by Konica Minolta Co., Ltd.)
· Measurement conditions: Field of view is 2°, light source uses standard illuminant D65 (daylight, correlated color temperature 6504K), light source 25°

As shown in Table 1, Examples 1 to 6 had a color difference ΔE after degreasing in the wool buff test of 5 or less, and ΔE after degreasing in the sponge buff test of 3 or less, with low color difference ΔE values in both tests. Example 4 had a color difference ΔE after degreasing in the wool buff test of 0.7 and a color difference ΔE after degreasing in the sponge buff test of 0.3, which were particularly low values. Degreasing means the operation of removing oil from the coating film surface after polishing by spraying isopropyl alcohol.

On the other hand, Comparative Example 1 had a color difference ΔE in the wool buff test of 10 or more and a color difference ΔE in the sponge buff test of 4 or more, with high color difference ΔE values in both tests.

(Evaluation)

Examples 1 to 6 had high polishing rate values and low color difference ΔE values. Low color difference ΔE values mean that the scratch removal performance by polishing is high, and the finished surface after polishing can be made favorable. Examples 1 to 6 had high polishing rates and low color difference ΔE values, so the performance was evaluated as good (○).

On the other hand, Comparative Example 1 had a high color difference ΔE value, so the performance was evaluated as poor (×). Comparative Examples 2 to 4 had low polishing rate values, so the performance was evaluated as poor (×).

(Relationship between Shape Parameter K and Polishing Rate)

For Examples 1 to 4, upon comparison between the shape parameter K of the abrasive grains and the polishing rate, a tendency was confirmed that the polishing rate value decreases as the shape parameter K value increases. This tendency is common in both the wool buff test and the sponge buff test.

(Relationship between Shape Parameter K and Color Difference ΔE)

For Examples 1 to 4, upon comparison between the shape parameter K of the abrasive grains and the color difference ΔE, a tendency was confirmed that the color difference ΔE value decreases as the shape parameter K value increases. This tendency is also common in both the wool buff test and the sponge buff test.

<Other Embodiments>

Although the present technology has been described by embodiments and examples as above, the statements and drawings forming a part of this disclosure do not limit the present technology. Various alternative embodiments, examples, and operational techniques will be apparent to those skilled in the art from this disclosure. The present technology naturally includes various embodiments not described herein. At least one of various omissions, substitutions, and modifications of components can be performed within a range that does not depart from the gist of the above-described embodiments and examples. Moreover, the effects described in this specification are merely illustrative and not limiting, and other effects may also be achieved.

The disclosure can also take the following configurations.

(1) A polishing composition, comprising:

abrasive grains, water, and a hydrophobic dispersion medium,
wherein a value of a shape parameter K, obtained by dividing a specific surface area ($m^2/g$) of the abrasive grains by a square of a particle diameter D50 ($\mu$m), is 0.6 or more and 60 or less.

(2) The polishing composition according to (1), wherein the value of the shape parameter K is 0.9 or more and 45 or less.

(3) The polishing composition according to (1) or (2), wherein the specific surface area ($m^2/g$) of the abrasive grains is 2.1 or more and 21 or less.

(4) The polishing composition according to (1) or (2), wherein the specific surface area ($m^2/g$) of the abrasive grains is 8 or more and 17 or less.

(5) The polishing composition according to any one of (1) to (4), wherein an average secondary particle diameter of the abrasive grains is 0.05 $\mu$m or more and 10 $\mu$m or less.

(6) The polishing composition according to any one of (1) to (5), wherein regarding a particle size distribution of the abrasive grains, where particle diameters at which cumulative volumes from a large particle diameter side of a cumulative particle diameter distribution on a volume basis become 10% and 90% respectively are defined as D10 and D90 respectively,
a particle size distribution width (D10-D90)/D50 of the abrasive grains is 0.1 or more and 4 or less.

(7) The polishing composition according to any one of (1) to (3), wherein regarding a particle size distribution of the abrasive grains, where particle diameters at which cumulative volumes from a large particle diameter side of a cumulative particle diameter distribution on a volume basis become 10% and 90% respectively are defined as D10 and D90 respectively,

a particle size distribution width (D10-D90)/D50 of the abrasive grains is 0.4 or more and 2.0 or less, and
the specific surface area ($m^2/g$) of the abrasive grains is 12 or more and 20 or less.

(8) The polishing composition according to any one of (1) to (7), wherein the abrasive grains are contained in an amount of 5% by mass or more and 30% by mass or less with respect to a total mass of the polishing composition.

(9) The polishing composition according to any one of (1) to (8), wherein the abrasive grains comprise aluminum oxide.

(10) The polishing composition according to (9), wherein an $\alpha$-conversion rate of the aluminum oxide is 50% or more and 100% or less.

(11) The polishing composition according to any one of (1) to (10), wherein the hydrophobic dispersion medium comprises:

at least one selected from a group consisting of normal paraffinic hydrocarbon, isoparaffinic hydrocarbon, naphthenic hydrocarbon, and terpene hydrocarbon, and
has a flash point of 30°C or more and 100°C or less.

(12) The polishing composition according to (11), wherein the hydrophobic dispersion medium has a vapor pressure at 20°C of 0.004 kPa or more and 2 kPa or less.

(13) The polishing composition according to any one of (1) to (12), further comprising a surfactant.

(14) The polishing composition according to any one of (1) to (13), wherein the polishing composition is for resin polishing.

(15) A method for producing a polishing composition, comprising:

a step of mixing abrasive grains, a hydrophobic dispersion medium, and water to produce the polishing composition,

wherein a value of a shape parameter K, obtained by dividing a specific surface area ($m^2$/g) of the abrasive grains by a square of a particle diameter D50 ($\mu$m), is 0.6 or more and 60 or less.

(16) A polishing method, comprising:

a step of polishing a polishing target using the polishing composition according to any one of (1) to (14).

(17) The polishing method according to (16), wherein the polishing target comprises at least one selected from a group consisting of a resin material, an alloy material, and a glass material.

(18) The polishing method according to (16) or (17), wherein in the step of polishing the polishing target,

the polishing composition is supplied to a surface of the polishing target, and polishing is performed by bringing a polishing buff into contact with the surface to which the polishing composition has been supplied.

Description of Reference Numerals

1 automatic polishing apparatus
2 robot arm
4 polishing tool
5 pressing force detection part
7 controller
10 polishing buff
10a polishing surface
20, 21, 22 joint
23 tip portion
90 polishing target

## Claims

1. A polishing composition, comprising:

abrasive grains, water, and a hydrophobic dispersion medium,

wherein a value of a shape parameter K, obtained by dividing a specific surface area ($m^2$/g) of the abrasive grains by a square of a particle diameter D50 ($\mu$m), is 0.6 or more and 60 or less.

2. The polishing composition according to claim 1, wherein the value of the shape parameter K is 0.9 or more and 45 or less.

3. The polishing composition according to claim 1 or 2, wherein the specific surface area ($m^2$/g) of the abrasive grains is 2.1 or more and 21 or less.

4. The polishing composition according to claim 1 or 2, wherein the specific surface area ($m^2$/g) of the abrasive grains is 8 or more and 17 or less.

5. The polishing composition according to claim 1 or 2, wherein an average secondary particle diameter of the abrasive grains is 0.05 $\mu$m or more and 10 $\mu$m or less.

6. The polishing composition according to claim 1 or 2, wherein regarding a particle size distribution of the abrasive grains, where particle diameters at which cumulative volumes from a large particle diameter side of a cumulative particle diameter distribution on a volume basis become 10% and 90% respectively are defined as D10 and D90 respectively,

a particle size distribution width (D10-D90)/D50 of the abrasive grains is 0.1 or more and 4 or less.

7. The polishing composition according to claim 1 or 2, wherein regarding a particle size distribution of the abrasive grains, where particle diameters at which cumulative volumes from a large particle diameter side of a cumulative particle diameter distribution on a volume basis become 10% and 90% respectively are defined as D10 and D90 respectively,

a particle size distribution width (D10-D90)/D50 of the abrasive grains is 0.4 or more and 2.0 or less, and the specific surface area ($m^2$/g) of the abrasive grains is 12 or more and 20 or less.

8. The polishing composition according to claim 1 or 2, wherein the abrasive grains are contained in an amount of 5% by mass or more and 30% by mass or less with respect to a total mass of the polishing composition.

9. The polishing composition according to claim 1 or 2, wherein the abrasive grains comprise aluminum oxide.

10. The polishing composition according to claim 9, wherein an $\alpha$-conversion rate of the aluminum oxide is 50% or more and 100% or less.

11. The polishing composition according to claim 1 or 2, wherein the hydrophobic dispersion medium comprises:

at least one selected from a group consisting of normal paraffinic hydrocarbon, isoparaffinic hydrocarbon, naphthenic hydrocarbon, and terpene hydrocarbon, and has a flash point of 30°C or more and 100°C or less.

12. The polishing composition according to claim 11, wherein the hydrophobic dispersion medium has a vapor pressure at 20°C of 0.004 kPa or more and 2 kPa or less.

13. The polishing composition according to claim 1 or 2, further comprising a surfactant.

14. The polishing composition according to claim 1 or 2, wherein the polishing composition is for resin polishing.

15. A method for producing a polishing composition, comprising:

a step of mixing abrasive grains, a hydrophobic dispersion medium, and water to produce the polishing composition, wherein a value of a shape parameter K, obtained by dividing a specific surface area ($m^2$/g) of the abrasive grains by a square of a particle diameter D50 ($\mu$m), is 0.6 or more and 60 or less.

16. A polishing method, comprising:
a step of polishing a polishing target using the polishing composition according to claim 1 or 2.

17. The polishing method according to claim 16, wherein the polishing target comprises at least one selected from a group consisting of a resin material, an alloy material, and a glass material.

18. The polishing method according to claim 17, wherein in the step of polishing the polishing target, the polishing composition is supplied to a surface of the polishing target, and polishing is performed by bringing a polishing buff into contact with the surface to which the polishing composition has been supplied.

# FIG. 1

## INTERNATIONAL SEARCH REPORT

| International application No. |
|---|
| **PCT/JP2024/011946** |

### A. CLASSIFICATION OF SUBJECT MATTER

*C09K 3/14*(2006.01)i; *B24B 37/00*(2012.01)i; *C01F 7/02*(2022.01)i; *C09G 1/02*(2006.01)i
FI: C09K3/14 550Z; C09K3/14 550D; C09G1/02; B24B37/00 H; C01F7/02

According to International Patent Classification (IPC) or to both national classification and IPC

### B. FIELDS SEARCHED

Minimum documentation searched (classification system followed by classification symbols)

C09K3/14; B24B37/00; C01F7/02; C09G1/02

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2010-163553 A (NICCA CHEMICAL CO., LTD.) 29 July 2010 (2010-07-29) claims, paragraphs [0001], [0008], [0013]-[0018], [0023], [0037], [0046]-[0047] | 1-18 |
| A | Exxsol D80, [retrieved on 31 May 2024], [online], Internet: <URL: https://www.exxonmobilchemical.com/en/chemicals/webapi/dps/v1/datasheets/130000000247/1/en> see Flash Point | 1-18 |
| A | ALUMINA, [retrieved on 31 May 2024], [online], Internet: <URL: https://www.nikkeikin.co.jp/pdf/products/chemical/alumina.pdf> see particle size distribution (p. 13), A33F (p. 15) | 1-18 |
| A | WO 2022/210744 A1 (FUJIMI INCORPORATED) 06 October 2022 (2022-10-06) entire text | 1-18 |
| A | JP 2000-282011 A (SOFT 99 CORPORATION KK) 10 October 2000 (2000-10-10) entire text | 1-18 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **31 May 2024** | **11 June 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

**EP 4 692 275 A1**

## INTERNATIONAL SEARCH REPORT

| International application No. |
|---|
| **PCT/JP2024/011946** |

**C.    DOCUMENTS CONSIDERED TO BE RELEVANT**

| Category* | Citation of document, with indication, where appropriate, of the relevant passages | Relevant to claim No. |
|---|---|---|
| A | JP 2004-25323 A (ISHIHARA CHEM. CO., LTD.) 29 January 2004 (2004-01-29) entire text | 1-18 |
| A | JP 2006-56996 A (ISHIHARA CHEM. CO., LTD.) 02 March 2006 (2006-03-02) entire text | 1-18 |

Form PCT/ISA/210 (second sheet) (July 2022)

20

## INTERNATIONAL SEARCH REPORT
### Information on patent family members

International application No.

**PCT/JP2024/011946**

| Patent document cited in search report | | | Publication date (day/month/year) | Patent family member(s) | | | Publication date (day/month/year) |
|---|---|---|---|---|---|---|---|
| JP | 2010-163553 | A | 29 July 2010 | (Family: none) | | | |
| WO | 2022/210744 | A1 | 06 October 2022 | EP | 4317353 | A1 | |
| | | | | CN | 117321168 | A | |
| | | | | CA | 3215090 | A | |
| | | | | TW | 202302806 | A | |
| JP | 2000-282011 | A | 10 October 2000 | (Family: none) | | | |
| JP | 2004-25323 | A | 29 January 2004 | (Family: none) | | | |
| JP | 2006-56996 | A | 02 March 2006 | (Family: none) | | | |

Form PCT/ISA/210 (patent family annex) (July 2022)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008255232 A
- JP 2008127456 A
- JP 2007277379 A